(19) Europäisches Patentamt
European Patent Office
Office européen des brevets

(11) EP 3 184 675 B1

# (12) EUROPEAN PATENT SPECIFICATION

(45) Date of publication and mention of the grant of the patent:
**24.07.2019 Bulletin 2019/30**

(21) Application number: **15834440.8**

(22) Date of filing: **19.08.2015**

(51) Int Cl.:
***D01F 6/80*** (2006.01) ***D01D 5/00*** (2006.01)
***D01D 1/02*** (2006.01)

(86) International application number:
**PCT/KR2015/008650**

(87) International publication number:
**WO 2016/028078 (25.02.2016 Gazette 2016/08)**

## (54) HIGH-STRENGTH COPOLYMERIZED ARAMID FIBER AND PREPARING METHOD THEREFOR

HOCHFESTE COPOLYMERISIERTE ARAMIDFASER UND HERSTELLUNGSVERFAHREN DAFÜR

FIBRE D'ARAMIDE COPOLYMÉRISÉE À HAUTE RÉSISTANCE ET SON PROCÉDÉ DE PRÉPARATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.08.2014 KR 20140108345**

(43) Date of publication of application:
**28.06.2017 Bulletin 2017/26**

(73) Proprietor: **Kolon Industries, Inc.**
**Seoul 07793 (KR)**

(72) Inventors:
- **GU, Nam Dae**
  **Yongin-si**
  **Gyeonggi-do 16910 (KR)**
- **RHO, Kyeong Hwan**
  **Yongin-si**
  **Gyeonggi-do 16910 (KR)**

(74) Representative: **Ter Meer Steinmeister & Partner Patentanwälte mbB**
**Nymphenburger Straße 4**
**80335 München (DE)**

(56) References cited:
**KR-A- 930 700 706**
**KR-A- 20130 075 202**
**KR-A- 20140 007 835**
**US-A- 5 728 799**
**US-A1- 2012 168 983**
**US-A1- 2013 158 171**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

[Technical Field]

The present invention relates to a high-strength copolymerized aramid fiber and a method for preparing the same, and more particularly, to a high-strength copolymerized aramid fiber which includes aramid copolymers containing an aromatic group substituted with a cyano group (-CN), so as to have high intrinsic viscosity (IV), low polydispersity index (PDI) and high strength and elastic modulus. Further, the present invention provides a method for preparing a high-strength copolymerized aramid fiber, in which hydrogen chloride (HCl) generated during polymerization of the aramid copolymer is directly removed with a neutralizing agent dispersed in an organic solvent while being changed into a metal salt so as to prevent generation of acid crumbs and, instead, generate an additional salt, thus delaying gelation due to the acid crumbs, that is, extending a polymerization time so as to increase the intrinsic viscosity (IV) of the aramid copolymer while narrowing a molecular weight distribution, and, to improve a solubility of aramid polymer in the organic solvent due to the generation of the additional salt, thereby favorably spinning the aramid copolymer having high intrinsic viscosity (IV) even without using sulfuric acid.

[Background Art]

Aromatic polyamide, commonly referred to as an aramid, includes a para-based aramid having a structure in which benzene rings are linked linearly through an amide group (-CONH) and a meta-based aramid which has a linkage structure different from the para-based aramid.

The para-based aramid has excellent characteristics such as a high strength, high elasticity and low shrinkage. Since the para-based aramid has a high enough strength so as to be able to lift a two-ton vehicle with a thin cable made thereof having a thickness of about 5 mm, it is widely used for bulletproofing, as well as in a variety of applications in advanced industries of an aerospace field.

Further, the aramid is carbonized and becomes black at 500°C or more, thus being also spotlighted in fields requiring high heat-resistant properties.

The preparation method of aramid fiber has been explained well in Korean Patent Registration No. 10-0910537 owned by the present applicant. According to this registered patent, a mixture solution is prepared by dissolving aromatic diamine in a polymerization solvent, followed by adding aromatic diacid to the above solution to prepare an aramid polymer. Next, the aramid polymer is dissolved in a sulfuric acid solvent to prepare a spin dope, the spin dope is spun, followed by conducting coagulation, washing and drying processes in this order, thereby finally completing an aramid fiber.

However, if the aramid fiber is prepared according to the above-described processes, an aramid polymer in a solid state is prepared and again dissolved in a sulfuric acid solvent to prepare a spin dope, followed by spinning the same. Therefore, a manufacturing process becomes complicated, is harmful for a human body, and may cause a problem such as a decrease in durability due to corrosion of an apparatus.

Moreover, since the sulfuric acid solvent used for dissolving an aramid polymer having high chemical resistance and removed after spinning often causes environmental pollution, it should be appropriately treated after the use. Costs for treatment of such spent sulfuric acid usually reduce economic advantages of the aramid fiber.

In order to solve the above problems, Korean Patent Registration No. 10-171994 and Korean Patent Laid-Open Publication No. 10-2013-0075202 disclose a method for fabricating an aramid fiber directly using a copolymerized aramid polymerization solution as a spin dope, thus preparing the aramid fiber while not requiring a sulfuric acid solvent.

More particularly, in the above prior arts, a solid-phase aramid copolymer is prepared by adding terephthaloyl dichloride to an organic solvent in which para-phenylenediamine and cyano-para-phenylenediamine have been dissolved, and reacting the same. After completing the polymerization, the obtained solid-phase aramid copolymer is ground and uniformly dissolved by adding a neutralizing agent such as calcium hydroxide to prepare a spin dope, followed by spinning and coagulating the spin dope thus to fabricate a copolymerized aramid fiber.

According to the above conventional method, the aramid fiber could be fabricated without using a sulfuric acid solvent. However, paraphenylene, cyano-para-phenylenediamine and terephthaloyl dichloride react together to form hydrogen chloride (HCl), which generates acid crumbs and thus causes fast gelation. That is, since a reaction time is shortened, the polymerized aramid copolymer has lower intrinsic viscosity of about 5.0 and a polydispersity index (PDI) of about 2.2, hence causing a problem of enlarging a molecular weight distribution. As a result, the spin dope formed according to the conventional method has poor liquid crystalline properties to deteriorate spinning properties. The conventional method involved limitations in improving strength and elastic modulus of the fabricated aramid fiber.

In particular, when the polydispersity index (PDI) of the aramid copolymer is about 2.2, a molecular weight distribution is enlarged and a distribution of polymer chains having a low molecular weight (polymer chains having a short length) is increased. Whereas such a low molecular weight polymer chain (polymer chains having a short length) is present on a skin layer of the spun copolymerized aramid fiber, thus increasing end portions of the polymer chains

inside the skin layer. As a result, when tensioning the copolymerized aramid fiber, it causes a defect of early cutting off the end portions of the polymer chains which, in turns, causes a deterioration in the strength and elastic modulus.

Further, even though the intrinsic viscosity (IV) of the aramid copolymer is low about 5.0, a length of the polymer chains is decreased, hence causing a deterioration in the strength and elastic modulus of the copolymerized aramid fiber fabricated above.

Furthermore, the above conventional method requires a long period of time of 24 hours or more for preparing a spin dope by introducing a neutralizing agent into the aramid copolymer obtained after the polymerization, in order to uniformly dissolve a solid-phase aramid polymer, and therefore, causing a problem of decreasing productivity of the spin dope.

US 5 728 799 A is directed to an aromatic polyamide, an optical anisotropic dope containing the aromatic polyamide and a process of making the optical anisotropic dope which does not require sulfuric acid.

KR 2013 0075202 relates to an aramid fiber that comprises an aromatic poly amid which comprises 2.4-3.0 of polydispersity index (PDI); and a manufacturing method thereof comprises dissolving aromatic diamine in an organic solvent; adding aromatic diacid halide to the organic solvent at least as same molar amount as the aromatic diamine to obtain a polymerization solution comprising aromatic polyamide; extruding the polymerization solution through spinneret; and forming filament by passing the extruded polymerization solution through a coagulant.

[Disclosure]

[Technical Problem]

An object of the present invention is to provide a high-strength copolymerized aramid fiber which includes aramid copolymers containing an aromatic group substituted with a cyano group (-CN), so as to have a high intrinsic viscosity (IV), low polydispersity index (PDI) to narrow a molecular weight distribution, and high strength and elastic modulus.

Another object of the present invention is to provide a method for preparing a high-strength copolymerized aramid fiber, in which hydrogen chloride (HCl) generated during polymerization of para-phenylenediamine, cyano-para-phenylenediamine and terephthaloyl dichloride is directly removed with a neutralizing agent dispersed in an organic solvent while being changed into a metal salt so as to prevent generation of acid crumbs and, instead, generate an additional salt, thus delaying gelation due to the acid crumbs, that is, extending a polymerization time, so as to increase the intrinsic viscosity (IV) of the aramid copolymer while narrowing a molecular weight distribution and, to improve a solubility of aramid polymer in the organic solvent due to the generation of the additional salt, thereby favorably spinning the aramid copolymer having high intrinsic viscosity (IV) even without using sulfuric acid.

[Technical Solution]

In order to accomplish the above objects, the present invention includes: when para-phenylenediamine, cyano-para-phenylenediamine and terephthaloyl dichloride are sequentially added to an organic solvent and reacted together to prepare a spin dope for copolymerized aramid fibers, introducing and dispersing a neutralizing agent in the organic solvent before the reaction of the phenylenediamine, cyano-para-phenylenediamine and terephthaloyl dichloride dissolved in the organic solvent.

In an embodiment of the present invention, the neutralizing agent may be introduced and dispersed in an organic solvent in which para-phenylenediamine and cyano-para-phenylenediamine are not soluble. In another embodiment of the present invention, the neutralizing agent may be firstly introduced and dispersed in an organic solvent before dissolving terephthaloyl dichloride in the organic solvent in which para-phenylenediamine and cyano-para-phenylenediamine have been dissolved.

Further, in another embodiment of the present invention, before adding and reacting terephthaloyl dichloride in an organic solvent in which the neutralizing agent has been dispersed and para-phenylenediamine and cyano-para-phenylenediamine have been dissolved, the organic solvent may be cooled to a temperature of -10°C to -1°C.

[Advantageous Effects]

According to the present invention, hydrogen chloride (HCl) generated during polymerization of para-phenylenediamine, cyano-para-phenylenediamine and terephthaloyl dichloride is directly removed by the neutralizing agent dispersed in the solvent while being changed into a metal salt, and thus acid crumbs are not generated but an additional salt is rather generated. Therefore, gelation due to the acid crumbs is delayed, that is, a reaction time is extended to generate an additional salt so as to produce aramid copolymers that exhibit excellent solubility in an organic solvent while having high intrinsic viscosity (IV) and low polydispersity index (PDI). Further, using the aramid copolymer may

fabricate a high-strength copolymerized aramid fiber with excellent spinning properties even without using sulfuric acid.

[Description of Drawings]

Hereinafter, the present invention will be described in detail.

Embodiments of the present invention described below are proposed as illustrative examples to help understanding the present invention but do not particularly limit the subject matters of the present invention to be protected. Further, it will be apparent to those skilled in the art that various alterations and modifications of the present invention are possible within the technical spirit and scope of the present invention. Accordingly, the present invention includes inventions described in the claims and all of the alterations and modification within equivalents thereof.

According to an aspect of the present invention, there is provided a method for fabricating a high-strength copolymerized aramid fiber, including: (i) introducing a neutralizing agent into an organic solvent then dispersing the same; (ii) dissolving para-phenylenediamine and cyano-para-phenylenediamine in a molar ratio of 1:9 to 9:1 in the organic solvent in which the neutralizing agent is dispersed; (iii) adding terephthaloyl dichloride to the organic solvent, in which the neutralizing agent is dispersed, and the para-phenylenediamine and the cyano-para-phenylenediamine were dissolved, in an equal molar amount to a total amount of the para-phenylenediamine and cyano-para-phenylenediamine, then, reacting the same thus to prepare a spin dope; and (iv) spinning the spin dope to fabricate a copolymerized aramid fiber.

According to another aspect of the present invention, there is provided a method for fabricating a high-strength copolymerized aramid fiber, including: (i) dissolving para-phenylenediamine and cyano-para-phenylenediamine in a molar ratio of 1:9 to 9:1 in an organic solvent; (ii) introducing a neutralizing agent into the organic solvent, in which the para-phenylenediamine and the cyano-para-phenylenediamine were dissolved, then, dispersing the same therein; (iii) adding terephthaloyl dichloride to the organic solvent, in which the neutralizing agent is dispersed, and the para-phenylenediamine and the cyano-para-phenylenediamine were dissolved, in an equal molar amount to a total amount of the para-phenylenediamine and cyano-para-phenylenediamine, then, reacting the same thus to prepare a spin dope; and (iv) spinning the spin dope to fabricate a copolymerized aramid fiber.

More particularly, the present invention may introduce a neutralizing agent into an organic solvent in advance before introducing para-phenylenediamine and cyano-para-phenylenediamine to the organic solvent. Otherwise, after introducing the para-phenylenediamine and the cyano-para-phenylenediamine to the organic solvent and before introducing the terephthaloyl dichloride therein, the neutralizing agent may be introduced into the organic solvent.

The neutralizing agent used herein may be calcium hydroxide, calcium oxide, sodium hydroxide, lithium carbonate, etc. and an added amount of the neutralizing agent may range from 50 to 120 % by mole ('mol.%') to the organic solvent.

The neutralizing agent may play a role of removing hydrogen chloride (HCl) generated during polymerization of the para-phenylenediamine, cyano-para-phenylenediamine and terephthaloyl dichloride while generating an additional salt so as to improve the solubility of polymer in the spin dope.

The organic solvent may include, for example, N-methyl-2-pyrrolidone (NMP), N,N-dimethylacetamide (DMAc), hexamethyl phosphoamide (HMPA), N,N,N',N'-tetramethylurea (TMU), N,N-dimethylformamide (DMF), or a mixture thereof.

With regard to an embodiment of the present invention, first of all, the neutralizing agent may be introduced into the organic solvent and dispersed therein.

Next, the para-phenylenediamine and cyano-para-phenylenediamine are dissolved in the organic solvent including the neutralizing agent dispersed therein in a molar ratio of 1:9 to 9:1. Herein, in order to increase a polymerization degree, an inorganic salt is preferably added to the solution.

The inorganic salt is added to increase a polymerization degree of aromatic polyamide, and may include, for example, alkaline metal halide salts or alkali-earth metal halide salts such as $CaCl_2$, LiCl, NaCl, KCl, LiBr and KBr. These inorganic salts may be added alone or in combination of two or more thereof.

Preferably, the inorganic salt is added in an amount of 2 to 5% by weight ('wt.%') to a weight of the organic solvent.

Next, terephthaloyl dichloride is added to the organic solvent, in which the neutralizing agent is dispersed, and the para-phenylenediamine and the cyano-para-phenylenediamine were dissolved, in an equal molar amount to a total amount of the para-phenylenediamine and cyano-para-phenylenediamine, followed by reacting the same to prepare a spin dope. Then, spinning the spin dope fabricates a copolymerized aramid fiber.

According to a particular embodiment, after spinning the spin dope through a spinneret, coagulation, washing, drawing and winding may be executed to fabricate a copolymerized aramid fiber.

The present invention may further include cooling the organic solvent in which the neutralizing agent is dispersed, and the para-phenylenediamine and the cyano-para-phenylenediamine were dissolved, to a temperature of -10°C to -1°C before the addition and reaction of the terephthaloyl dichloride in the organic solvent in which the neutralizing agent is dispersed, and the para-phenylenediamine and the cyano-para-phenylenediamine were dissolved.

The cooling process may suppress polymerization heat generated during polymerization of the para-phenylenediamine, cyano-para-phenylenediamine and terephthaloyl dichloride, as well neutralization heat generated during neutralization of the neutralizing agent and hydrogen chloride (HCl). Therefore, the polymerization of the para-phenylenediamine, cyano-para-phenylenediamine and terephthaloyl dichloride may be continued for a longer period of time. As a result, the polymerized aramid copolymer may have higher intrinsic viscosity (IV).

According to the present invention, the hydrogen chloride (HCl) generated by polymerization of the para-phenylenediamine, cyano-para-phenylenediamine and terephthaloyl dichloride is directly removed by the neutralizing agent dispersed in the organic solvent while being changed into a metal salt. Therefore, acid crumbs are not generated but an additional salt is rather generated to delay gelation due to the acid crumbs. In other words, intrinsic viscosity (IV) of the aramid copolymer becomes higher while narrowing a molecular weight distribution by increasing a polymerization time, and a solubility of the aramid polymer in the organic solvent is improved due to the generation of the additional salt. As a result, the aramid copolymer having high intrinsic viscosity (IV) as described above may be favorably spun to fabricate a high strength copolymerized aramid fiber without using sulfuric acid.

More particularly, when the polydispersity index (PDI) of the aramid copolymer ranges from 1.5 to 2.0, a molecular weight distribution becomes narrow and thus a distribution of high molecular weight polymer chains (polymer chains having a long length) is increased. Herein, the high molecular weight polymer chains (polymer chains having a long length) are present on a skin layer of the spun copolymerized aramid fiber, and when tensioning the copolymerized aramid fiber, end portions of the polymer, which are early cut off and act as a defect, are decreased thus to greatly improve the strength and elastic modulus of the fabricated copolymerized aramid fiber.

Further, when the polydispersity index (PDI) of the aramid copolymer ranges from 1.5 to 2.0, a molecular weight distribution becomes narrow and thus a distribution of high molecular weight polymer chains (with a long length) is increased to improve liquid crystal properties of dissolved spin dope. As a result, spinning properties may be enhanced.

Further, when the intrinsic viscosity (IV) of the aramid copolymer is high about 6.0 to 8.5, a length of the polymer chains becomes longer and, for reasons mentioned above, the strength and elastic modulus of the copolymerized aramid fiber may be improved.

Hereinafter, the present invention will be described in more detail with reference to examples and comparative examples.

However, the following examples are proposed as preferred embodiments of the present invention only, and it is duly not construed that the scope of the present invention is particularly limited to these examples.

## Example 1

30 g of N-methyl-2-pyrrolidone (organic solvent) including 3 wt.% of calcium chloride (inorganic salt) was fed to a reactor under a nitrogen atmosphere, and 6.99 g of calcium oxide (neutralizing agent) was added and dispersed therein.

Then, 5.7 g of para-phenylenediamine and 10.55 g of cyano-para-phenylenediamine were added to the organic solvent including the neutralizing agent dispersed therein, followed by dissolving the same in the reactor to prepare a mixture solution.

Next, 26.79 g of terephthaloyl dichloride was added to the mixture solution in which the neutralizing agent is dispersed, and the para-phenylenediamine and the cyano-para-phenylenediamine were dissolved, followed by reacting the solution thus to prepare a spin dope including aramid copolymer uniformly dissolved therein.

As a result of visually observing the prepared spin dope, a gel or solid phase was not monitored, therefore, it may be seen that the aramid copolymer in the spin dope has excellent solubility.

Following this, after extruding the spin dope through a spinneret, the spin dope sequentially passed through an air gap and a coagulant solution, thus forming a multi-filament having a linear density of 3,300 dtex (3,000 deniers). A pressure of a spin pack was 193 bar (2,800 psi) while a spin velocity was 600 meter per minute (mpm).

Thereafter, the multi-filament was washed and the washed multi-filament was dried and drawn in a dry roller set up at a temperature of 150°C. The drawn multi-filament was subjected to heat treatment and winding at 250°C, thus fabricating a copolymerized aramid fiber.

Physical properties of the fabricated copolymerized aramid fiber were measured, and results thereof are shown in Table 1 below.

## Example 2

30 g of N-methyl-2-pyrrolidone (organic solvent) including 3 wt.% of calcium chloride (inorganic salt) was fed to a reactor under a nitrogen atmosphere, and 6.99 g of calcium oxide (neutralizing agent) was added and dispersed therein.

Then, 5.7 g of para-phenylenediamine and 10.55 g of cyano-para-phenylenediamine were added to the organic

solvent including the neutralizing agent dispersed therein, followed by dissolving the same in the reactor to prepare a mixture solution.

Next, 26.79 g of terephthaloyl dichloride was added to the mixture solution in which the neutralizing agent is dispersed, and the para-phenylenediamine and the cyano-para-phenylenediamine were dissolved, followed by reacting the solution at -90°C thus to prepare a spin dope including aramid copolymer uniformly dissolved therein.

As a result of visually observing the prepared spin dope, a gel or solid phase was not monitored, therefore, it may be seen that the aramid copolymer in the spin dope has excellent solubility.

Following this, after extruding the spin dope through a spinneret, the spin dope sequentially passed through an air gap and a coagulant solution, thus forming a multi-filament having a linear density of 3,300 dtex (3,000 deniers). A pressure of a spin pack was 193 bar (2,800 psi) while a spin velocity was 600 meter per minute (mpm).

Thereafter, the multi-filament was washed and the washed multi-filament was dried and drawn in a dry roller set up at a temperature of 150°C. The drawn multi-filament was subjected to heat treatment and winding at 250°C, thus fabricating a copolymerized aramid fiber.

Physical properties of the fabricated copolymerized aramid fiber were measured, and results thereof are shown in Table 1 below.

Example 3

300 g of N-methyl-2-pyrrolidone (organic solvent) including 3 wt.% of calcium chloride (inorganic salt) was fed to a reactor under a nitrogen atmosphere, and 5.7 g of para-phenylenediamine and 10.55 g of cyano-para-phenylenediamine were added and dissolved therein.

Then, 6.99 g of calcium oxide (neutralizing agent) was added to the above organic solvent in which the para-phenylenediamine and the cyano-para-phenylenediamine were dissolved, followed by dispersing the same.

Next, the mixture solution in which the neutralizing agent is dispersed, and the para-phenylenediamine and the cyano-para-phenylenediamine were dissolved, was cooled to - 5°C, followed by adding 25.78 g of terephthaloyl dichloride thereto and reacting the same thus to prepare a spin dope including aramid polymer uniformly dissolved therein.

As a result of visually observing the prepared spin dope, a gel or solid phase was not monitored, therefore, it may be seen that the aramid polymer in the spin dope has excellent solubility.

Following this, after extruding the spin dope through a spinneret, the spin dope sequentially passed through an air gap and a coagulant solution, thus forming a multi-filament having a linear density of 3,300 dtex (3,000 deniers). A pressure of a spin pack was 193 bar (2,800 psi) while a spin velocity was 600 meter per minute (mpm).

Thereafter, the multi-filament was washed and the washed multi-filament was dried and drawn in a dry roller set up at a temperature of 150°C. The drawn multi-filament was subjected to heat treatment and winding at 250°C, thus fabricating an aramid fiber.

Physical properties of the fabricated aramid fiber were measured, and results thereof are shown in Table 1 below.

Example 4

300 g of N-methyl-2-pyrrolidone (organic solvent) including 3 wt.% of calcium chloride (inorganic salt) was fed to a reactor under a nitrogen atmosphere, and 5.7 g of para-phenylenediamine and 10.55 g of cyano-para-phenylenediamine were added and dissolved therein.

Then, 6.99 g of calcium oxide (neutralizing agent) was added to the above organic solvent in which the para-phenylenediamine and the cyano-para-phenylenediamine were dissolved, followed by dispersing the same.

Next, 25.78 g of terephthaloyl dichloride was added to the mixture solution in which the neutralizing agent is dispersed, and the para-phenylenediamine and the cyano-para-phenylenediamine were dissolved, followed by reacting the solution thus to prepare a spin dope including aramid polymer uniformly dissolved therein.

As a result of visually observing the prepared spin dope, a gel or solid phase was not monitored, therefore, it may be seen that the aramid polymer in the spin dope has excellent solubility.

Following this, after extruding the spin dope through a spinneret, the spin dope sequentially passed through an air gap and a coagulant solution, thus forming a multi-filament having a linear density of 3,300 dtex (3,000 deniers). A pressure of a spin pack was 193 bar (2,800 psi) while a spin velocity was 600 meter per minute (mpm).

Thereafter, the multi-filament was washed and the washed multi-filament was dried and drawn in a dry roller set up at a temperature of 150°C. The drawn multi-filament was subjected to heat treatment and winding at 250°C, thus fabricating an aramid fiber.

Physical properties of the fabricated aramid fiber were measured, and results thereof are shown in Table 1 below.

Comparative Example 1

300 g of N-methyl-2-pyrrolidone (organic solvent) including 3 wt.% of calcium chloride (inorganic salt) was fed to a reactor under a nitrogen atmosphere, and 5.7 g of para-phenylenediamine and 10.55 g of cyano-para-phenylenediamine were added and dissolved therein to prepare a mixture solution.
Then, 26.79 g of terephthaloyl dichloride was added to the above mixture solution in which the para-phenylenediamine and the cyano-para-phenylenediamine were dissolved, followed by reacting the same to prepare a solid-phase aramid copolymer.
Next, the prepared aramid copolymer was dissolved with calcium hydroxide (neutralizing agent) for 12 hours, thus preparing a spin dope.
Following this, after extruding the spin dope through a spinneret, the spin dope sequentially passed through an air gap and a coagulant solution, thus forming a multi-filament having a linear density of 3,300 dtex (3,000 deniers). A pressure of a spin pack was 193 bar (2,800 psi) while a spin velocity was 600 meter per minute (mpm).
Thereafter, the multi-filament was washed and the washed multi-filament was dried and drawn in a dry roller set up at a temperature of 150°C. The drawn multi-filament was subjected to heat treatment and winding at 250°C, thus fabricating a copolymerized aramid fiber.
Physical properties of the fabricated copolymerized aramid fiber were measured, and results thereof are shown in Table 1 below.

[Table 1]

| Category | Intrinsic viscosity (IV) | Polydispers ity index (PDI) | Strength in cN/dtex (g/d) | Elastic modulus in cN/dtex (g/d) |
|---|---|---|---|---|
| Example 1 | 6.2 | 1.95 | 22 (25) | 968 (1,100) |
| Example 2 | 8.3 | 1.57 | 26 (30) | 1,056 (1,200) |
| Example 3 | 7.8 | 1.62 | 25 (28) | 1,012 (1,150) |
| Example 4 | 7.0 | 1.80 | 23 (26) | 968 (1,100) |
| Comparative Example 1 | 5.0 | 2.40 | 19 (22) | 792 (900) |

A molecular weight distribution of the copolymerized aramid fiber was assessed by following procedures.

Polydispersity index (PDI)

The aramid fiber was dissolved in dimethylformamide (DMF) to prepare a sample. A weight average molecular weight and a number average molecular weight of the prepared sample were determined, respectively, using a Shodex GPC column of Waters manual injector kit at a temperature of 35°C under a flow rate of 10 ml/min through a gel permeation chromatography equipped with a refraction index detector. With the measured values, a molecular weight distribution was calculated by Equation 1 below.

[Equation 1]

$$\text{Polydispersity index (PDI)} = Mw/Mn$$

(wherein Mw denotes a weight average molecular weight, and Mn denotes a number average molecular weight).

Strength (g/d) and Elastic modulus (g/d)

The strength and elastic modulus of the aramid fiber were determined according to an ASTM D885 test method.
More particularly, the strength and elastic modulus were measured by tensioning the sample in Instron tester (Instron Engineering Corp, canton, Mass) until the copolymerized aramid fiber having a length of 25 cm is broken.
Herein, a tensile velocity was set to 300 m/min and an initial load was set to fineness × 1/30 g.
After testing 5 samples, an average of tested values was estimated.
The elastic modulus was estimated from a slope on S-S curve, while the strength was calculated from the

maximum load.

Intrinsic Viscosity (IV)

An intrinsic viscosity (IV) is defined by a following equation.

$$IV = \ln(\eta rel)/C$$

(wherein C denotes a concentration of a polymer solution (a solution prepared by dissolving 0.5 g of polymer in 100 ml of concentrated sulfuric acid), and the relative viscosity (ηrel) is a ratio of flow times between the polymer solution and the solvent, which were measured by a capillary viscometer at 30°C. Unless stated otherwise, the intrinsic viscosity was measured using a concentrated sulfuric acid solvent with a concentration of 95 to 98%).

[Industrial Applicability]

The high-strength copolymerized aramid fiber of the present invention may be useful as a raw material for fiber/resin complex substances applied to bullet-proof materials or automobile parts.

## Claims

1. A high-strength copolymerized aramid fiber, comprising aramid copolymers which contain an aromatic group substituted with a cyano group (-CN), so as to have an intrinsic viscosity (IV) of 6.0 to 8.5, a polydispersity index (PDI) of 1.5 to 2.0, and a strength of 20 to 28 cN/dtex (23 to 32 g/d),
wherein intrinsic viscosity is defined by the following equation:

$$IV = \ln(\eta rel)/C$$

wherein C denotes a concentration of a polymer solution prepared by dissolving 0.5 g of polymer in 100 ml of concentrated sulfuric acid with a concentration of 95 to 98%, and the relative viscosity (ηrel) is a ratio of flow times between the polymer solution and the solvent, which is measured by a capillary viscometer at 30°C,
wherein polydispersity index is determined by dissolving the aramid fiber in dimethylformamide (DMF) to prepare a sample; A weight average molecular weight and a number average molecular weight of the prepared sample are determined, respectively, using a Shodex GPC column of Waters manual injector kit at a temperature of 35°C under a flow rate of 10 ml/min through a gel permeation chromatography equipped with a refraction index detector; With the measured values, a molecular weight distribution is calculated by Equation 1 below.

[Equation 1]

$$\text{Polydispersity index (PDI)} = Mw/Mn,$$

wherein Mw denotes a weight average molecular weight, and Mn denotes a number average molecular weight; and wherein strength is determined from the maximum load according to an ASTM D885 test method by tensioning a sample in Instron tester until the copolymerized aramid fiber having a length of 25 cm is broken, a tensile velocity is set to 300 m/min and an initial load is set to fineness × 1/30 g;
After testing 5 samples, an average of tested values is estimated.

2. The high-strength copolymerized aramid fiber according to claim 1, wherein the elastic modulus of the high-strength copolymerized aramid fiber ranges from 968 to 1144 cN/dtex (1,100 to 1,300 g/d), estimated from a slope on S-S curve according to an ASTM D885 test method by tensioning a sample in Instron tester until the copolymerized aramid fiber having a length of 25 cm is broken, a tensile velocity is set to 300 m/min and an initial load is set to fineness × 1/30 g;
After testing 5 samples, an average of tested values is estimated.

3. The high-strength copolymerized aramid fiber according to claim 1, wherein the aramid copolymer containing the aromatic group substituted with a cyano group (-CN) has a repeat unit represented by Formula I below:

[Formula I] -(NH-A-NHCO-Ar-CO)- (I)

(wherein Ar is an aromatic group represented by Formula II below, and A is an aromatic group represented by Formula III below or an aromatic group having a ratio of the aromatic group of Formula II below to the aromatic group of Formula III below in a range of 1:9 to 9:1)

[Formula II]

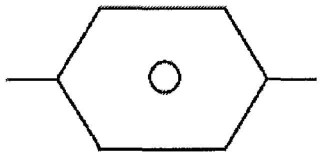

(II)

[Formula III]

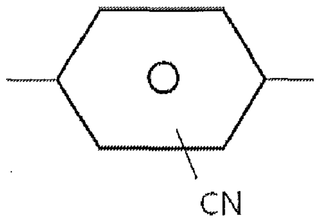

(III)

4. A method for fabricating a high-strength copolymerized aramid fiber according to claim 1, the method comprising:

(i) introducing a neutralizing agent into an organic solvent then dispersing the same;
(ii) dissolving para-phenylenediamine and cyano-para-phenylenediamine in a molar ratio of 1:9 to 9:1 in the organic solvent in which the neutralizing agent is dispersed;
(iii) adding terephthaloyl dichloride to the organic solvent, in which the neutralizing agent is dispersed, and the para-phenylenediamine and the cyano-para-phenylenediamine were dissolved, in an equal molar amount to a total amount of the para-phenylenediamine and cyano-para-phenylenediamine, then, reacting the same thus to prepare a spin dope; and
(iv) spinning the spin dope to fabricate a copolymerized aramid fiber.

5. The method for fabricating a high-strength copolymerized aramid fiber according to claim 4, further comprising cooling the organic solvent to -10°C to -1°C before the addition and reaction of terephthaloyl dichloride in the organic solvent in which the neutralizing agent is dispersed, and the para-phenylenediamine and the cyano-para-phenylenediamine were dissolved.

6. The method for fabricating a high-strength copolymerized aramid fiber according to claim 4 or 5, wherein the neutralizing agent is one selected from calcium hydroxide, calcium oxide, sodium hydroxide and lithium carbonate.

7. The method for fabricating a high-strength copolymerized aramid fiber according to claim 4 or 5, wherein the organic solvent is one selected from N-methyl-2-pyrrolidone, N,N-dimethylacetamide, hexamethylphosphoamide, N,N,N',N'-tetramethylurea and N,N-dimethylformamide.

8. The method for fabricating a high-strength copolymerized aramid fiber according to claim 4 or 5, wherein the spin dope is spun through a spinneret, followed by conducting coagulation, washing, drawing and winding the spin dope.

9. A method for fabricating a high-strength copolymerized aramid fiber according to claim 1, the method comprising:

(i) dissolving para-phenylenediamine and cyano-para-phenylenediamine in a molar ratio of 1:9 to 9:1 in an organic solvent;
(ii) introducing a neutralizing agent into the organic solvent, in which the para-phenylenediamine and the cyano-para-phenylenediamine were dissolved, then, dispersing the same therein;
(iii) adding terephthaloyl dichloride to the organic solvent, in which the neutralizing agent is dispersed, and the

para-phenylenediamine and the cyano-para-phenylenediamine were dissolved, in an equal molar amount to a total amount of the para-phenylenediamine and cyano-para-phenylenediamine, then, reacting the same thus to prepare a spin dope; and
(iv) spinning the spin dope to fabricate a copolymerized aramid fiber.

**10.** The method for fabricating a high-strength copolymerized aramid fiber according to claim 9, further comprising cooling the organic solvent to -10°C to -1°C before the addition and reaction of terephthaloyl dichloride in the organic solvent in which the neutralizing agent is dispersed, and the para-phenylenediamine and the cyano-para-phenylenediamine were dissolved.

**11.** The method for fabricating a high-strength copolymerized aramid fiber according to claim 9 or 10, wherein the neutralizing agent is one selected from calcium hydroxide, calcium oxide, sodium hydroxide and lithium carbonate.

**12.** The method for fabricating a high-strength copolymerized aramid fiber according to claim 9 or 10, wherein the organic solvent is one selected from N-methyl-2-pyrrolidone, N,N-dimethylacetamide, hexamethylphosphoamide, N,N,N',N'-tetramethylurea and N,N-dimethylformamide.

**13.** The method for fabricating a high-strength copolymerized aramid fiber according to claim 9 or 10, wherein the spin dope is spun through a spinneret, followed by conducting coagulation, washing, drawing and winding the spin dope.

**Patentansprüche**

**1.** Hochfeste, copolymerisierte Aramidfaser, umfassend Aramidcopolymere, die eine aromatische Gruppe enthalten, die mit einer Cyano-Gruppe (-CN) substituiert ist, sodass sie eine intrinsische Viskosität (IV) von 6,0 bis 8,5, einen Polydispersitätsindex (PDI) von 1,5 bis 2,0 und eine Stärke von 20 bis 28 cN/dtex (23 bis 32 g/d) aufweist,
wobei intrinsische Viskosität durch die folgende Gleichung definiert wird:

$$IV = \ln(\eta rel)/C$$

wobei C eine Konzentration einer Polymerlösung bezeichnet, die durch Auflösen von 0,5 g Polymer in 100 ml konzentrierter Schwefelsäure mit einer Konzentration von 95 bis 98 % hergestellt wird, und die relative Viskosität (ηrel) ein Verhältnis der Fließzeiten zwischen der Polymerlösung und dem Lösungsmittel ist, das mit einem Kapillarviskometer bei 30 °C gemessen wird,
wobei der Polydispersitätsindex durch Auflösen der Aramidfaser in Dimethylformamid (DMF) bestimmt wird, um eine Probe herzustellen; ein gewichtsgemitteltes Molekulargewicht und ein zahlengemitteltes Molekulargewicht der hergestellten Probe jeweils unter Anwendung einer Shodex GPC-Säule von Waters manuellem Injektorkit bei einer Temperatur von 35 °C unter einer Fließrate von 10 ml/min durch eine Gelpermeationschromatographie bestimmt werden, die mit einem Brechungsindexdetektor ausgerüstet ist; wobei mit den gemessenen Werten eine Molekulargewichtsverteilung mit nachstehender Gleichung 1 errechnet wird.

[Gleichung 1]
Polydispersitätsindex (PDI) = Mw/Mn,

wobei Mw ein gewichtsgemitteltes Molekulargewicht und Mn ein zahlengemitteltes Molekulargewicht bezeichnet;
und wobei Stärke aus der Höchstbelastung nach einem ASTM D885 Prüfverfahren bestimmt wird, indem eine Probe im Instron-Prüfgerät gedehnt wird, bis die copolymerisierte Aramidfaser, die eine Länge von 25 cm aufweist, bricht, eine Zuggeschwindigkeit auf 300 m/min eingestellt wird und eine Anfangsbelastung auf Feinheit x 1/30 g eingestellt wird;
nach Prüfen von 5 Proben ein Durchschnitt von getesteten Werten geschätzt wird.

**2.** Hochfeste, copolymerisierte Aramidfaser nach Anspruch 1, wobei der Elastizitätsmodul der hochfesten, copolymerisierten Aramidfaser von 968 bis 1144 cN/dtex (1.100 bis 1.300 g/d) reicht, der aus einer Steigung an der S-S-Kurve nach einem ASTM D885 Prüfverfahren bestimmt wird, bei dem eine Probe im Instron Testgerät gedehnt wird,

bis die copolymerisierte Aramidfaser, die eine Länge von 25 cm aufweist, bricht, wobei eine Zuggeschwindigkeit auf 300 m/min eingestellt wird und eine Anfangsbelastung auf Feinheit x 1/30 g eingestellt wird;
nach Testen von 5 Proben ein Durchschnitt der getesteten Werte geschätzt wird.

**3.** Hochfeste, copolymerisierte Aramidfaser nach Anspruch 1, wobei das Aramidcopolymer, das die mit einer Cyanogruppe (-CN) substituierte aromatische Gruppe enthält, eine Wiederholungseinheit hat, die von nachstehender Formel 1 dargestellt wird:

[Formel I] -(NH-A-NHCO-Ar-CO)-(I)

(wobei Ar eine aromatische Gruppe ist, die durch nachstehende Formel II dargestellt wird, und A eine aromatische Gruppe ist, die durch nachstehende Formel III dargestellt wird, oder eine aromatische Gruppe, die ein Verhältnis der aromatischen Gruppe von nachstehender Formel II zu der aromatischen Gruppe der nachstehenden Formel III in einem Bereich von 1:9 bis 9:1 aufweist);

[Formel II]

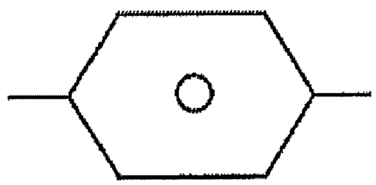

(II)

[Formel III]

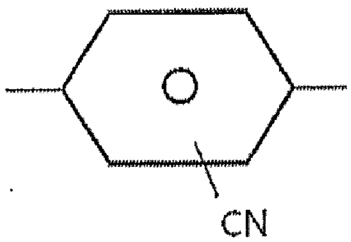

(III)

**4.** Verfahren zur Herstellung einer hochfesten, copolymerisierten Aramidfaser nach Anspruch 1, umfassend:

(i) Einführen eines Neutralisationsmittels in ein organisches Lösungsmittel, dann Dispergieren desselben;
(ii) Auflösen von Paraphenylendiamin und Cyano-Paraphenylendiamin in einem Molverhältnis von 1 : 9 bis 9 : 1 im organischen Lösungsmittel, in dem das Neutralisationsmittel dispergiert ist;
(iii) Zugeben von Terephthaloyldichlorid zum organischen Lösungsmittel, in dem das Neutralisationsmittel dispergiert ist und das Paraphenylendiamin und das Cyano-Paraphenylendiamin aufgelöst wurden, in einer gleichen Molmenge zu einer Gesamtmenge des Paraphenylendiamins und Cyano-Paraphenylendiamins, dann diese reagieren lassen, um eine Spinnlösung herzustellen; und
(iv) Spinnen der Spinnlösung, um eine copolymerisierte Aramidfaser herzustellen.

**5.** Verfahren zur Herstellung einer hochfesten, copolymerisierten Aramidfaser nach Anspruch 4, ferner umfassend Kühlen des organischen Lösungsmittels auf -10°C bis -1°C vor Zugabe und Reagieren des Terephthaloyldichlorids im organischen Lösungsmittel, in dem das Neutralisationsmittel dispergiert ist und das Paraphenylendiamin und das Cyano-Paraphenylendiamin aufgelöst wurden.

**6.** Verfahren zur Herstellung einer hochfesten, copolymerisierten Aramidfaser nach Anspruch 4 oder 5, wobei das Neutralisationsmittel aus Kalziumhydroxyd, Kalziumoxid, Natriumhydroxid und Lithiumcarbonat gewählt wird.

**7.** Verfahren zur Herstellung einer hochfesten, copolymerisierten Aramidfaser nach Anspruch 4 oder 5, wobei das organische Lösungsmittel aus N-Methyl-2-pyrrolidon, N,N-Dimethylacetamid, Hexamethylphosphoamid, N,N,N',N'-Tetramethylharnstoff und N,N-Dimethylformamid gewählt wird.

8. Verfahren zur Herstellung einer hochfesten, copolymerisierten Aramidfaser nach Anspruch 4 oder 5, wobei die Spinnlösung durch eine Spinndüse gesponnen wird, gefolgt von Koagulation, Waschen, Ziehen und Wickeln der Spinnlösung.

9. Verfahren zur Herstellung einer hochfesten, copolymerisierten Aramidfaser nach Anspruch 1, umfassend:

(i) Lösen von Paraphenylendiamin und Cyano-Paraphenylendiamin in einem Molverhältnis von 1:9 bis 9:1 in einem organischen Lösungsmittel;
(ii) Einführen eines Neutralisationsmittels in das organische Lösungsmittel, in dem das Paraphenylendiamin und das Cyano-Paraphenylendiamin aufgelöst wurden, dann Dispergieren desselben im Lösungsmittel;
(iii) Zugeben von Terephthaloyldichlorid zum organischen Lösungsmittel, in dem das Neutralisationsmittel dispergiert ist und das Paraphenylendiamin und das Cyano-Paraphenylendiamin aufgelöst wurden, in einer gleichen Molmenge zu einer Gesamtmenge des Paraphenylendiamins und Cyano-Paraphenylendiamins, dann diese reagieren lassen, um eine Spinnlösung herzustellen; und
(iv) Spinnen der Spinnlösung, um eine copolymerisierte Aramidfaser herzustellen.

10. Verfahren zur Herstellung einer hochfesten, copolymerisierten Aramidfaser nach Anspruch 9, ferner umfassend Kühlen des organischen Lösungsmittels auf -10°C bis -1°C vor Zugabe und Reaktion des Terephthaloyldichlorids im organischen Lösungsmittel, in dem das Neutralisationsmittel dispergiert ist und das Paraphenylendiamin und das Cyano-Paraphenylendiamin aufgelöst wurden.

11. Verfahren zur Herstellung einer hochfesten, copolymerisierten Aramidfaser nach Anspruch 9 oder 10, wobei das Neutralisationsmittel aus Kalziumhydroxid, Kalziumoxid, Natriumhydroxid und Lithiumcarbonat ausgewählt wird.

12. Verfahren zur Herstellung einer hochfesten, copolymerisierten Aramidfaser nach Anspruch 9 oder 10, wobei das organische Lösungsmittel aus N-Methyl-2-pyrrolidon, N,N-Dimethylacetamid, Hexamethylphosphoamid, N,N,N',N'-Tetramethylharnstoff und N,N-Dimethylformamid gewählt wird.

13. Verfahren zur Herstellung einer hochfesten, copolymerisierten Aramidfaser nach Anspruch 9 oder 10, wobei die Spinnlösung durch eine Spinndüse gesponnen wird, gefolgt von Koagulation, Waschen, Ziehen und Wickeln der Spinnlösung.

**Revendications**

1. Une fibre d'aramide copolymérisée à haute résistance, comprenant des copolymères d'aramide qui contiennent un groupe aromatique substitué par un groupe cyano (-CN), de manière à avoir une viscosité intrinsèque (IV) de 6,0 à 8,5, un indice de polydispersité (PDI) de 1,5 à 2,0 et une force de 20 à 28 cN/dtex (23 à 32 g/d),
dans laquelle la viscosité intrinsèque est définie par l'équation suivante :

$$IV = \ln(\eta rel) / C$$

dans laquelle C désigne une concentration d'une solution de polymère préparée en dissolvant 0,5 g de polymère dans 100 ml d'acide sulfurique concentré ayant une concentration de 95 à 98%, et la viscosité relative (ηrel) est un rapport des temps d'écoulement entre la solution de polymère et le solvant, mesurés à l'aide d'un viscosimètre capillaire à 30°C,
dans laquelle l'indice de polydispersité (PDI) est déterminé en dissolvant la fibre d'aramide dans du diméthylformamide (DMF) pour préparer un échantillon; un poids moléculaire moyen en poids et un poids moléculaire moyen en nombre sont déterminés, respectivement, en utilisant une colonne Shodex GPC du kit d'injecteur manuel Waters à une température de 35° C sous un débit de 10 ml/min par chromatographie de perméation de gel équipée d'un détecteur d'indice de réfraction; Avec les valeurs mesurées, une distribution de poids moléculaire a été calculée par l'équation 1 ci-dessous.

[équation 1]
Indice de polydispersité PDI = Mw/Mn,

dans laquelle Mw désigne un poids moléculaire moyen en poids et Mn désigne un poids moléculaire moyen en nombre ;
et dans laquelle la résistance est déterminée à partir de la tension maximale selon une méthode de test selon la norme ASTM D885 en mettant un échantillon sous tension dans un testeur Instron jusqu'à ce que la fibre d'aramide copolymérisée ayant une longueur de 25 cm soit rompue, une vitesse de traction est réglée à 300 m/min et une charge initiale est réglée à finesse × 1/30 g ;
Après le test de 5 échantillons, une moyenne des valeurs testées est estimée.

2. La fibre d'aramide copolymérisée à haute résistance selon la revendication 1, dans laquelle le module d'élasticité de la fibre d'aramide copolymérisée à haute résistance varie de 968 à 1144 cN/dtex (1.100 à 1.300 g/d), estimé à partir de la pente d'une courbe S selon une méthode de test selon la norme ASTM D885 en mettant un échantillon sous tension dans un testeur Instron jusqu'à ce que la fibre d'aramide copolymérisée ayant une longueur de 25 cm soit rompue, une vitesse de traction est réglée à 300 m/min et une charge initiale est réglée à finesse × 1/30 g ;
Après le test de 5 échantillons, une moyenne des valeurs testées est estimée.

3. La fibre d'aramide copolymérisée à haute résistance selon la revendication 1, dans laquelle le copolymère d'aramide contenant le groupe aromatique substitué par un groupe cyano (-CN) a un motif répétitif représenté par la formule I ci-dessous:

[Formule I] -(NH-A-NHCO-Ar-CO)- (I)

(dans laquelle Ar est un groupe aromatique représenté par la formule II ci-dessous, et A est un groupe aromatique représenté par la formule III ci-dessous ou un groupe aromatique ayant un rapport du groupe aromatique de formule II ci-dessous au groupe aromatique de formule III ci-dessous dans une plage de 1:9 à 9:1)

[Formule II]

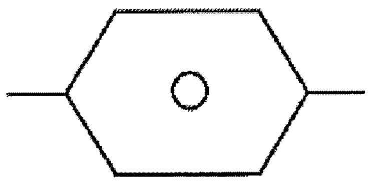

(II)

[Formule III]

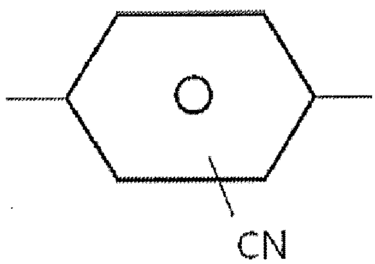

(III)

4. Un procédé de fabrication d'une fibre d'aramide copolymérisée à haute résistance selon la revendication 1, comprenant les étapes consistant à:

(i) introduire un agent neutralisant dans un solvant organique et puis le disperser;
(ii) dissoudre de la paraphénylènediamine et de la cyano-paraphénylènediamine dans un rapport molaire de 1:9 à 9:1 dans le solvant organique dans lequel l'agent neutralisant est dispersé;
(iii) ajouter du dichlorure de téréphtaloyle au solvant organique dans lequel l'agent neutralisant est dispersé et la para-phénylènediamine et la cyano-paraphénylènediamine ont été dissous, en une quantité molaire égale à une quantité totale de paraphénylènediamine et de cyano-paraphénylènediamine, puis faire réagir ceux-ci pour ainsi préparer une solution à filer; et
(iv) filer la solution à filer pour fabriquer une fibre d'aramide copolymérisée.

5. Le procédé de fabrication d'une fibre d'aramide copolymérisée à haute résistance selon la revendication 4, comprenant en outre le refroidissement du solvant organique à une température de -10° C à -1° C avant l'addition et la réaction du dichlorure de téréphtaloyle dans le solvant organique dans lequel l'agent neutralisant est dispersés et la paraphénylènediamine et la cyano-paraphénylènediamine ont été dissoutes.

6. Le procédé de fabrication d'une fibre d'aramide copolymérisée à haute résistance selon la revendication 4 ou 5, dans lequel l'agent neutralisant est un agent choisi parmi l'hydroxyde de calcium, l'oxyde de calcium, l'hydroxyde de sodium et le carbonate de lithium.

7. Le procédé de fabrication d'une fibre d'aramide copolymérisée à résistance élevée selon la revendication 4 ou 5, dans lequel le solvant organique est choisi parmi la N-méthyl-2-pyrrolidone, le N,N-diméthylacétamide, l'hexaméthylphosphoamide, la N,N,N',N'-tétraméthylurée et le N,N-diméthylformamide.

8. Le procédé de fabrication d'une fibre d'aramide copolymérisée à haute résistance selon la revendication 4 ou 5, dans lequel la pâte à filer est filée à travers une filière, puis on effectue la coagulation, le lavage, l'étirage et l'enroulement de la pâte à filer.

9. Un procédé de fabrication d'une fibre d'aramide copolymérisée à haute résistance selon la revendication 1, comprenant les étapes consistant à:

(i) dissoudre de la paraphénylènediamine et de la cyano-paraphénylènediamine dans un rapport molaire de 1:9 à 9:1 dans un solvant organique;
(ii) introduire un agent neutralisant dans le solvant organique, dans lequel la para-phénylènediamine et la cyano-paraphénylènediamine ont été dissoutes, et puis disperser le même là-dedans;
(iii) ajouter du dichlorure de téréphtaloyle au solvant organique dans lequel l'agent neutralisant est dispersé et la para-phénylènediamine et la cyano-paraphénylènediamine ont été dissous, en une quantité molaire égale à une quantité totale de paraphénylènediamine et de cyano-paraphénylènediamine, puis faire réagir ceux-ci pour préparer une solution à filer; et
(iv) filer la solution à filer pour fabriquer une fibre d'aramide copolymérisée.

10. Le procédé de fabrication d'une fibre d'aramide copolymérisée à haute résistance selon la revendication 9, comprenant en outre le refroidissement du solvant organique à une température de -10° C à -1° C avant l'addition et la réaction du dichlorure de téréphtaloyle dans le solvant organique dans lequel l'agent neutralisant est dispersés et la para-phénylènediamine et la cyano-paraphénylènediamine ont été dissoutes.

11. Le procédé de fabrication d'une fibre d'aramide copolymérisée à haute résistance selon la revendication 9 ou 10, dans lequel l'agent neutralisant est un agent choisi parmi l'hydroxyde de calcium, l'oxyde de calcium, l'hydroxyde de sodium et le carbonate de lithium.

12. Le procédé de fabrication d'une fibre d'aramide copolymérisée à haute résistance selon la revendication 9 ou 10, dans lequel le solvant organique est choisi parmi la N-méthyl-2-pyrrolidone, le N,N-diméthylacétamide, l'hexaméthylphosphoamide, la N,N,N',N'-tétraméthylurée et le N,N-diméthylformamide.

13. Le procédé de fabrication d'une fibre d'aramide copolymérisée à haute résistance selon la revendication 9 ou 10, dans lequel la pâte à filer est filée à travers une filière, puis on effectue la coagulation, le lavage, l'étirage et l'enroulement de la pâte à filer.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 100910537
- KR 10171994
- KR 1020130075202
- US 5728799 A
- KR 20130075202